# FASCICULE DE BREVET EUROPEEN

(11) **EP 2 300 175 B1**
(45) Date de publication et mention de la délivrance du brevet: **21.12.2011**
(21) Numéro de dépôt: 09794033.2
(22) Date de dépôt: 06.07.2009
(51) Int. Cl.: B07C 3/14

(54) **Procédé pour le tri de plusieurs objects avec un dépouillement d'informations**
Verfahren zur Sortierung mehrerer Objekte mit Datenanalyse
Method for sorting a plurality of objects with data analysis

(30) Priorité: 11.07.2008 FR 0854751
(43) Date de publication de la demande: 30.03.2011
(73) Titulaire: Solystic, 94257 Gentilly (FR)
(72) Inventeur: CAILLON, Christophe, F-91220 Bretigny Sur Orge (FR); LAGRANGE, Hervé, F-75015 Paris (FR)
(74) Mandataire: Prugneau, Philippe
(86) Numéro de dépôt international: PCT/FR2009/051330
(87) Numéro de publication internationale: WO 2010/004203

(56) Documents cités:
- DE-B3-102006 059 525

## Description

L'invention concerne un procédé pour le tri de plusieurs objets dans lequel chaque objet a une surface munie d'une indication de point d'acheminement vers lequel l'objet doit être acheminé et dans lequel chaque objet passe au moins deux fois dans une installation de tri. Lors du premier passage de tri d'un objet courant dans l'installation, on génère une image numérique de la surface de l'objet comportant ladite indication, on réalise une lecture automatique dans ladite image de ladite indication pour diriger l'objet vers une sortie de tri de l'installation, on dérive également de l'image un identifiant unique pour l'objet et on enregistre cet identifiant unique dans une base de données en correspondance avec l'image de l'objet et le résultat de la lecture. Lors de chaque passage de tri suivant de chaque objet dans l'installation, on génère de nouveau une image numérique courante de l'objet courant comportant ladite indication pour générer un identifiant courant pour l'objet et on recherche une concordance entre cet identifiant courant et les identifiants enregistrés dans la base de données lors du premier passage de tri des objets pour diriger l'objet courant vers une sortie de tri de l'installation. Lors du dernier passage de tri, en cas de concordance, l'image courante de chaque objet courant est également enregistrée dans la base de données en correspondance avec l'identifiant de l'objet courant généré lors du premier passage de tri dans l'installation.

Dans un tel procédé, l'identifiant unique d'un objet est donc dérivé de l'image de cet objet. Il s'agit d'une signature d'image. Cet identifiant peut comporter d'autres attributs mesurés sur l'objet lui-même comme son poids, sa longueur, son épaisseur, etc....

Dans le cas du tri postal d'envois, on exploite ce type d'identification pour identifier sans marquage par impression chaque envoi. Cette signature d'image peut comporter deux composantes, l'une dite « composante image» qui caractérise les distributions globales et locales de niveaux de gris des pixels dans l'image de l'envoi, l'autre dite « composante postale » qui caractérise l'indication du point d'acheminement apposée à la surface de l'envoi à un niveau d'analyse non syntaxique. La construction d'une telle signature d'image est en particulier décrite dans le document de brevet FR-2841673.

De façon connue en soi, les installations de tri postal sont sujettes à des dysfonctionnements conduisant à ce qu'un envoi (ou plusieurs) soit acheminé vers une destination erronée. Un acheminement erroné d'un envoi peut provenir par exemple d'un mauvais fonctionnement du système de lecture automatique de l'adresse postale de destinataire par OCR, des outils de vidéo-codage, du système de comparaison des signatures d'image, d'une défaillance mécanique d'un aiguillage de sortie de tri, ou encore du fait des phénomènes de prise double au dépilage des envois à l'entrée de l'installation par exemple, etc... Il arrive que c'est au moment de la distribution du courrier par le facteur que ce type d'erreur est constaté. L'envoi mal acheminé est alors isolé des autres envois à distribuer pour être redirigé vers la bonne direction. L'erreur d'acheminement doit ensuite être analysée pour corriger l'origine du dysfonctionnement.

Dans le document de brevet DE-102006059525, on décrit un processus de dépouillement d'informations pour analyser la cause d'un acheminement erroné d'un envoi. Ce processus consiste à évaluer une donnée de tri postal à partir de l'adresse de destinataire apposée sur la surface de l'envoi mal acheminé pour récupérer dans la base de données l'image de cet envoi générée lors de la première passe de tri. Toutefois, un tel processus ne peut véritablement être mise en oeuvre que s'il est possible d'atteindre automatiquement le niveau d'évaluation le plus profond pour l'adresse de destinataire de l'envoi mal acheminé. Si cette adresse est quelque peu illisible pour un système de lecture automatique, ou en partie inexacte, ce niveau d'évaluation ne pourra pas être atteint et le dépouillement ne pourra pas être réalisé.

Le but de l'invention est de proposer un procédé pour le tri de plusieurs objets comme des envois postaux tels que lettres, magazines ou paquets, tel que défini plus haut, mais qui est amélioré pour réaliser un dépouillement d'informations en vue de pouvoir identifier de façon systématique la cause d'un acheminement erroné d'un ou de plusieurs objets, en particulier des envois postaux qui sont identifiés sans marquage dans une installation de tri à l'aide d'une technique d'identification par signature d'image.

A cet effet, l'invention a pour objet un procédé pour le tri de plusieurs objets dans lequel chaque objet a une surface munie d'une indication de point d'acheminement vers lequel l'objet doit être acheminé et dans lequel chaque objet passe au moins deux fois dans une installation de tri,

lors du premier passage de tri d'un objet courant dans l'installation, on génère une image numérique de la surface de l'objet comportant ladite indication, on réalise une lecture automatique dans ladite image de ladite indication pour diriger l'objet vers une sortie de tri de l'installation, on génère également à partir de l'image un identifiant unique pour l'objet et on enregistre cet identifiant unique dans une base de données en correspondance avec l'image de l'objet et le résultat de la lecture,
et lors de chaque passage de tri suivant de chaque objet dans l'installation, on génère de nouveau une image numérique courante de l'objet comportant ladite indication pour dériver un identifiant courant pour l'objet et on recherche une concordance entre cet identifiant courant et les identifiants enregistrés dans la base de données lors du premier passage des objets dans l'installation pour diriger l'objet courant vers une sortie de tri de l'installation,
et dans lequel on recherche dans la base de données au moins une image générée lors d'un passage de tri dans l'installation pour au moins un objet mal acheminé afin de réaliser un dépouillement des informations enregistrées pour cet objet dans la base de données,

caractérisé en ce que lors de ce dernier passage de tri de l'objet courant dans l'installation, on enregistre une donnée de regroupement en correspondance avec une image de cet objet dans la base de données de telle sorte à obtenir en mémoire différents groupes d'images correspondant respectivement aux différents regroupements des objets dans les sorties de tri et les étapes suivantes sont exécutées pour l'objet mal acheminé afin de réaliser le dépouillement des informations :
- on recherche (22-28) dans la base de données une image d'objet qui est celle d'un objet de référence correctement acheminé et,
   - à partir de cette image d'objet de référence, on balaie (29-34) un ensemble d'images d'objets regroupées qui inclut l'image de l'objet de référence pour identifier une image de l'objet mal acheminé.

L'idée à la base du procédé selon l'invention est donc d'utiliser un ou plusieurs envois postaux correctement triés dans une tournée du facteur qui se trouvent dans cette tournée au voisinage immédiat de l'envoi mal acheminé et pour lequel on doit rechercher l'origine du mauvais acheminement. Par exemple, on pourra choisir l'envoi qui est immédiatement adjacent (devant ou derrière) l'envoi mal acheminé dans la séquence des envois obtenue à la dernière passe de tri, c'est-à-dire dans la tournée du facteur. On peut considérer qu'un tel envoi adjacent à l'envoi mal acheminé dans la tournée du facteur a été dirigé dans la même sortie de tri machine que l'envoi mal acheminé. On peut dans un premier temps remonter à un image générée pour cet envoi de référence dans une passe de tri laquelle a été enregistrée dans la base de données. On peut en effet considérer qu'une évaluation de l'adresse de destinataire apposée sur l'envoi de référence peut être effectuée au niveau le plus profond du fait que cet envoi de référence a été correctement acheminé. Quand l'image de l'envoi de référence est trouvée dans la base, du fait du regroupement des images construit en dernière passe de tri, il est possible de faire défiler (y compris en boucle) ces images regroupées selon un certain ordre de présentation pour effectuer par un contrôle visuel la comparaison avec la surface de l'envoi mal acheminé et retrouver ainsi l'image de cet envoi mal acheminé pour approfondir ensuite le dépouillement d'informations le concernant.

Le procédé selon l'invention peut s'appliquer à un processus de tri postal en deux passes de tri ou plus de deux passes de tri, ces passes de tri pouvant être réalisées sur une seule machine de tri ou sur une installation de tri plus complexe comportant plusieurs machines de tri, par exemple disposées dans des centres de tri de départ et d'arrivée.

L'invention s'étend à une installation pour le tri de plusieurs objets qui comprend un système de dépouillement d'informations.

D'autres caractéristiques et avantages du procédé selon l'invention apparaîtront encore à la lecture de la description qui suit d'un exemple de mise en oeuvre illustré par les dessins.

La figure 1 illustre de façon très schématique le déroulement d'une première passe de tri d'envois postaux avec le procédé selon l'invention.

La figure 2 illustre de façon très schématique le déroulement d'une ultime passe de tri d'envois postaux (la dernière passe de tri) avec le procédé selon l'invention.

La figure 3 illustre sous la forme d'un organigramme la phase de dépouillement des informations enregistrées lors de différentes passes de tri pour identifier la cause d'un acheminement erroné d'un envoi postal.

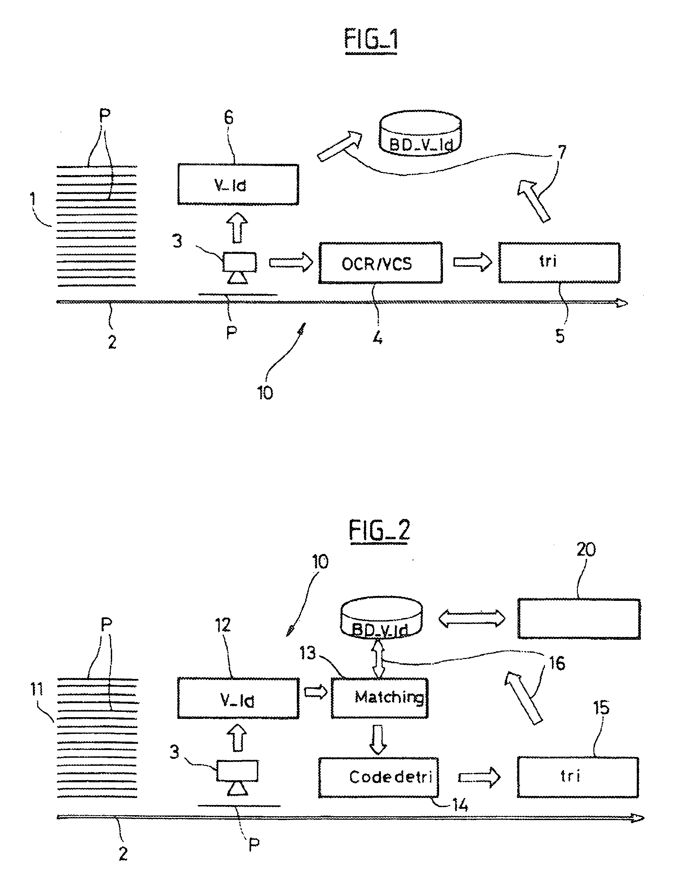

Sur les figures 1 et 2, on a représenté de façon très schématique des envois postaux, ici des lettres P, disposés en pile 1 dans un magasin d'entrée d'une installation de tri postal 10 pour être triés selon un ordre de distribution de la tournée du facteur. On a illustré par des blocs, les principales étapes de traitement de données du procédé selon l'invention lors de la première passe de tri (Fig. 1) respectivement lors de la seconde passe de tri (Fig. 2).

Par la suite, on considérera que la seconde passe de tri est ici la dernière ou l'ultime passe de tri des envois P pour préparer une tournée du facteur. Bien entendu, le procédé selon l'invention peut s'appliquer à un processus de tri ayant plus de 2 passes de tri.

En se référant à la figure 1, lors d'une première passe de tri, les envois P en pile sont sérialisés et sont déplacés en série par un convoyeur 2 devant une caméra 3. Les envois P sont en principe convoyés sur chant et il faut considérer que la figure 1 (et aussi la figure 2) représente la pile d'envois 1, le convoyeur 2 et la caméra 3 de la machine de tri selon une vue en plan.

La camera 3 forme une image de la surface de l'envoi courant P comportant l'adresse de distribution de l'envoi. Cette image est une image numérique exploitable par ordinateur pour réaliser automatiquement en 4 une lecture par OCR ou par vidéo-codage (VCS) de l'image numérique de l'adresse de distribution.

Le résultat de la lecture en 4 (en particulier un code de tri par exemple à 12 caractères numériques) est exploité pour commander en 5 les convoyeurs et les aiguillages de l'installation de façon à diriger l'envoi courant vers une sortie de tri correspondant à son adresse de distribution.

Par ailleurs, une signature d'image V-Id est extraite de l'image numérique de l'envoi courant en 6, cette signature d'image servant d'identifiant unique d'envoi. Cette signature est référencée par un numéro unique (Id-Tag) généralement non imprimé sur la surface de l'envoi courant. Ce code d'identification (qui est une sorte de numéro dans une série) est enregistré dans la base de données lors de la première passe de tri en correspondance avec le jeu d'informations généré pour chaque envoi courant pour constituer une clef d'accès mémoire à ce jeu d'informations enregistré dans la base de données BD_V-Id. L'impression de ce code d'identification peut s'avérer intéressante dans certains cas particuliers comme le traitement du courrier en redirection.

Le jeu d'informations constitué de l'image numérique formée par la caméra 3, des résultats de la lecture en 4 incluant un code de tri est enregistré (représenté par les flèches 7) dans une base de données BD_V-Id en correspondance avec la signature d'image V-Id de l'envoi courant. Ce jeu d'informations servira à un dépouillement ultérieur pour l'analyse d'un mauvais acheminement d'un ou de plusieurs envois.

Ce processus d'extraction de données et d'enregistrement d'informations est effectué pour chaque envoi P lors de la première passe de tri et le cas échéant à chaque passe de tri suivante.

A la fin de la première passe de tri, tous les envois sont récupérés dans les sorties de tri de l'installation et sont de nouveau introduits en entrée de l'installation pour une passe de tri suivante. Pour simplifier, on considèrera qu'il s'agit de l'entrée de la machine de tri 10 utilisée pour la première passe de tri et que la préparation de la tournée du facteur avec les envois P est effectuée en deux passes de tri.

Sur la figure 2, on a illustré les étapes du procédé selon l'invention lors de la seconde et dernière passe de tri après laquelle les envois sont en séquence pour la distribution par le facteur.

Les envois P sont donc de nouveau présentés en pile 11 en entrée de la machine selon un certain ordre. Ils sont sérialisés et convoyés en série par un convoyeur 2 pour être amenés devant la caméra 3. La caméra 3 forme une image numérique courante pour un envoi courant P, cette image courante comportant l'adresse de distribution et à partir de cette image numérique, une signature d'image courante est extraite en 12 de la même manière qu'à l'étape 6.

Cette signature courante V-Id pour un envoi courant est ensuite comparée en 13 aux signatures d'image enregistrées dans la base de données à la première passe de tri pour détecter une concordance (« Matching »).

Lorsqu'une concordance est détectée à l'étape 13, du fait de l'association en mémoire des signatures avec les résultats de la lecture, le système récupère à l'étape 14 un code de tri dans la base de données BD_V-td qui sert à diriger à l'étape 15 l'envoi courant vers une sortie de tri.

Sur la figure 2, les flèches 16 indiquent qu'en cas de concordance, le jeu d'informations constitué par l'image de l'envoi courant formée en seconde et dernière passe de tri et l'empreinte courante formée en seconde passe de tri est enregistré dans la base de données BD_V-Id en correspondance avec le code d'identification Id-Tag affecté à l'envoi (récupéré par association en mémoire des signatures avec les codes d'identification).

Selon l'invention, lors de cette dernière passe de tri, on récupère de l'installation de tri une donnée indicative de la sortie de tri dans laquelle l'envoi courant est dirigé ou du bac de sortie de tri dans lequel l'envoi courant est stocké et on enregistre en mémoire dans la base de données cette donnée en correspondance avec le code d'identification de l'envoi.

En conséquence, à la dernière passe de tri d'un objet, le jeu d'informations enregistré en mémoire pour un envoi en vue d'un dépouillement d'informations ultérieur comprend au moins un code d'identification d'envoi, l'image de l'envoi formée à la première et à la dernière passe de tri, le résultat de la lecture d'adresse en première passe de tri, les signatures d'image générées à la première et à la dernière passe de tri ainsi qu'une donnée indicative de sortie de tri ou du numéro de bac de sortie de tri en dernière passe de tri.

Ce processus symbolisé par les étapes 12 à 16 est répété pour chaque envoi postal.

A la fin de la dernière passe de tri, grâce aux données indicatives de sorties de tri ou de numéros de bac de sortie de tri, on a construit en mémoire dans la base de données différents groupes d'images d'envois qui correspondent respectivement aux différents regroupements des envois dans les sorties de tri ou dans les bacs de sortie de tri.

Chaque groupe d'images peut ainsi comprendre un ensemble de plusieurs dizaines d'images. Si on affecte en plus une information d'horloge à chaque image enregistrée en dernière passe de tri ou un numéro d'ordre d'arrivée dans une sortie de tri, on peut ordonner dans chaque groupe d'images, les images des envois de façon chronologique dans l'ordre d'arrivée des envois dans la sortie de tri. Cette chronologie peut servir à construire une sorte de chaînage des jeux d'informations dans chaque groupe d'images. Bien entendu, la donnée indicative de la sortie de tri peut être complétée par des données indicatives de la machine de tri, du centre de tri et de la date du tri (etc...) afin de faciliter le processus de dépouillement d'informations décrit ci-après.

Bien entendu, le jeu d'informations enregistré pour un envoi pendant tout le processus de tri peut aussi et non limitativement inclure les images et les signatures d'image formées pendant les passes de tri intermédiaires entre la première passe de tri et la dernière passe de tri.

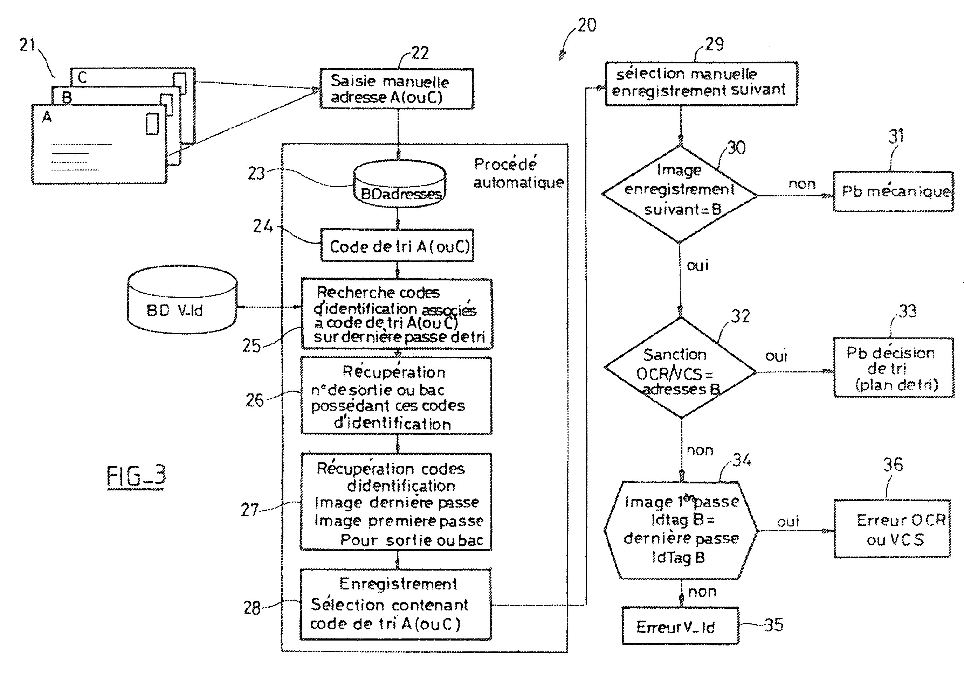

Sur la figure 3, on a représenté une séquence 21 de trois envois A,B et C dans une tournée du facteur pour illustrer le processus de dépouillement d'informations avec le procédé selon l'invention.

Dans cette séquence 21, on doit considérer que les envois A et C sont correctement acheminés alors que l'envoi B est mal acheminé en ce que son point de distribution dans la tournée du facteur ne correspond pas à l'adresse du destinataire.

On décrit maintenant le fonctionnement du système 20 de dépouillement d'informations enregistrées dans la base de données BD_V-Id. Bien entendu, il faut comprendre que le système 20 peut exploiter des informations qui ont été répliquées depuis la base de données BD_V-Id.

A l'étape 22, le facteur chargé de la distribution des envois ou un autre opérateur de la Poste constate que l'envoi B est mal acheminé (ou est sur une mauvaise direction de distribution). L'envoi B doit donc être isolé pour être réacheminé vers une direction correcte. Le facteur relève l'adresse de destinataire de l'envoi mal acheminé.

Selon l'invention, le facteur relève aussi dans la séquence 21 l'adresse de destinataire apposée sur au moins un envoi postal correctement acheminé qui se trouve dans le voisinage de l'envoi B, de préférence l'un ou les deux envois les plus adjacents à l'envoi B, ici les envois de référence A et C.

Ce relevé d'adresses sur les envois A,B et C peut être fait par exemple simplement sous la forme d'une photographie de la surface des envois A,B et C comportant une adresse de destinataire. Il est entendu que plusieurs envois mal acheminés peuvent se suivre en séquence dans la tournée du facteur et dans ce cas le facteur choisira pour envoi de référence celui au moins qui est situé devant (ou en arrière) cette succession d'envois mal acheminés dans la séquence de la tournée du facteur.

Le dépouillement d'informations est réalisé à partir d'un terminal à écran d'affichage du système 20 pour accéder au contenu de la base de données BD_V-id (ou une réplique de celle-ci comme indiqué plus haut), ce terminal étant agencé pour effectuer des requêtes pour la recherche et l'affichage d'informations extraites de la base de données.

Le processus de dépouillement pour l'envoi B commence par l'introduction de l'adresse de destinataire de l'envoi A par exemple dans le terminal lequel est agencé pour la transformer en un code de tri à l'étape 24. Une base d'adresses postales BD-adresse 23 peut être nécessaire pour cette transformation d'une adresse postale en un code de tri machine.

A partir du code de tri généré à l'étape 24, le terminal est agencé pour récupérer par une requête dans la base de données un ensemble d'informations qui peut nécessiter en pratique plusieurs accès successifs à la base de données en fonction des indexations des champs de données de la base de données. Comme indiqué plus haut, à titre d'exemple on a considéré que le code d'identification constituait dans la base de données une clef d'accès primaire. Par conséquent, la remontée des informations de la base de données peut commencer par un accès à la base de données pour récupérer tous les codes d'identification d'envoi associés en mémoire à ce même code de tri généré à l'étape 24. Puis à l'étape 26, par un autre accès à la base de données, le terminal récupère les données indicatives de sortie de tri (ou de bac de stockage) associées par correspondance mémoire aux codes d'identification trouvés à l'étape 25. Puis enfin à l'étape 27, par un autre accès à la base de données, le terminal récupère les images de première passe et de dernière passe de tri associés par correspondance mémoire aux codes d'identification trouvés à l'étape 25.

Le nombre de codes d'identification trouvés à l'étape 25 peut être réduit automatiquement à l'aide d'un masque de sélection, sur la date et l'heure de la dernière passe de tri à considérer pour l'envoi A, qui peut être saisi à l'étape 22 dans la mesure où ce masque peut être comparé à des informations correspondantes enregistrées dans la base de données BD_V-Id lors du processus de tri de l'envoi A.

A l'étape 28, on considère pour simplifier le cas où un seul code d'identification a été obtenu à l'étape 25.

Les images de première et dernière passe de tri sont affichées à l'écran d'affichage du terminal et l'opérateur peut contrôler que ces images correspondent bien à la surface de l'envoi de référence A.

Dans le cas où plusieurs candidats ont été obtenus à l'étape 25, le terminal peut être agencé pour permettre l'affichage à l'écran des images d'envoi successives correspondantes à ces candidats. Par un contrôle visuel, l'operateur peut stopper le défilement pour sélectionner l'image d'envoi qui correspond à la surface de l'envoi de référence A.

A ce stade donc, le terminal du système de dépouillement affiche à l'écran l'image de la surface de l'envoi de référence A.

Du fait du groupement des images en mémoire construit à la dernière passe de tri, il est possible de présenter à l'écran d'affichage (étape 29) successivement une par une chacune des images de dernière passe de tri groupées avec l'image de l'envoi A et ce à la demande de l'opérateur, par exemple en réaction à la manipulation d'un curseur.

Dans la mesure ou ces images de dernière passe de tri sont chaînées selon un ordre chronologique, à l'aide du curseur il est possible d'obtenir l'affichage de l'image d'envoi qui suit ou alternativement qui précède en mémoire l'image de l'envoi de référence A.

A l'étape 30, l'opérateur contrôle maintenant visuellement l'image d'envoi qui précède l'image de l'envoi de référence A.

Si cette image d'envoi affichée ne correspond pas à la surface de l'envoi B mal acheminé, on peut considérer que la cause de l'acheminement erroné de l'envoi B est liée à un problème mécanique, cette cause étant illustrée par le bloc 31. Ce problème mécanique peut être lié au fait que l'envoi B s'est retrouvé en prise multiple au cours du traitement automatique en machine. Il peut être lié à un problème d'empilage ou de dépilage. Enfin, il peut être dû à une mauvaise manipulation d'un opérateur lors du transfert des envois entre les différentes passes de tri. L'opérateur peut de nouveau revenir à l'aide du curseur sur l'affichage de l'image de l'envoi A pour examiner plus en détail cette image, par exemple avec un outil de grossissement pour faire apparaître le cas échéant la présence d'un contour d'un autre envoi en arrière plan du contour de l'envoi A. Dans le cas où cette vérification ne donne pas de résultat, l'opérateur peut poursuivre l'analyse en balayant d'autres images d'envoi à l'aide du curseur pour approfondir l'analyse de la cause du mauvais acheminement.

Si, à l'étape 30, l'image affichée correspond maintenant à la surface de l'envoi B, l'opérateur poursuit le processus de dépouillement à l'étape 32 en comparant l'adresse réellement inscrite sur l'envoi B avec le résultat de la lecture par OCR ou par vidéo-codage enregistré dans la base de données BD_V-ID.

Si à l'étape 32, l'opérateur constate que l'adresse réellement inscrite sur l'envoi B correspond aux résultats de la lecture en première passe de tri, cela signifie que la cause du mauvais acheminement est liée aux algorithmes de tri eux-mêmes ce qui est illustré par le bloc 33.

Si à l'étape 32, l'adresse réellement inscrite sur l'envoi B ne correspond pas aux résultats de lecture en première passe de tri, alors l'opérateur poursuit le dépouillement à l'étape 34 en analysant à l'écran l'image attribuée à l'envoi B et enregistrée en première passe de tri.

Si à l'étape 34, les deux images de l'envoi B en première passe de tri et en dernière passe de tri ne correspondent pas au même envoi, cela signifie que la cause du mauvais acheminement est liée à une erreur dans le processus d'identification par signature d'images des envois ce qui est illustré par le bloc 35. Cette erreur peut provenir du processus de génération des signatures d'image, lors d'un problème de convoyage par exemple conduisant à générer une signature erronée, ou encore du processus de comparaison (« matching ») des signatures d'image. Dans cette étape 34, le terminal peut être agencé pour afficher toutes les images attribuées à l'envoi B enregistrées à chaque passe de tri. On peut alors en déduire la passe de tri où l'erreur d'identification est intervenue.

Si à l'étape 34, les deux images de l'envoi B affichées à l'écran correspondent à un même envoi, cela signifie selon que la cause du mauvais acheminement est liée à une erreur dans le processus de reconnaissance automatique d'adresse par OCR ou une erreur d'un opérateur de vidéo-codage ce qui est illustré par le bloc 36.

Bien entendu, le système de dépouillement selon l'invention permet à l'opérateur d'observer les images d'envois chaînées avant ou après celle de l'envoi A pour identifier une image d'envoi qui correspondrait à la surface de l'envoi B. Il est possible également de réaliser le dépouillement d'informations à partir de plusieurs envois de référence prélevés par le facteur au voisinage de l'envoi B de manière à agrandir l'espace pour la recherche de l'image de l'envoi B.

## Revendications

1. Procédé pour le tri de plusieurs objets (A,B,C) dans lequel chaque objet a une surface munie d'une indication de point d'acheminement vers lequel l'objet doit être acheminé et dans lequel chaque objet passe au moins deux fois dans une installation de tri,
lors du premier passage d'un objet courant dans l'installation, on génère une image numérique de la surface de l'objet comportant ladite indication, on réalise une lecture automatique (4) dans ladite image de ladite indication pour diriger l'objet vers une sortie de tri de l'installation, on génère (6) également à partir de l'image un identifiant unique pour l'objet et on enregistre (7) cet identifiant unique dans une base de données en correspondance avec l'image de l'objet et le résultat de la lecture,
et lors de chaque passage suivant de chaque objet dans l'installation, on génère de nouveau une image numérique courante de l'objet comportant ladite indication pour dériver (12) un identifiant courant pour l'objet et on recherche une concordance (13) entre cet identifiant courant et les identifiants enregistrés dans la base de données lors du premier passage des objets dans l'installation pour diriger l'objet courant vers une sortie de tri de l'installation,
et dans lequel on recherche (20) dans la base de données au moins une image générée lors d'un passage de tri dans l'installation pour au moins un objet mal acheminé afin de réaliser un dépouillement des informations enregistrées pour cet objet dans la base de données, **caractérisé en ce que** lors de ce dernier passage de tri de chaque objet dans l'installation, on enregistre une donnée de regroupement en correspondance avec une image de cet objet dans la base de données de telle sorte à obtenir en mémoire différents groupes d'images correspondant respectivement aux différents regroupements des objets dans les sorties de tri et les étapes suivantes sont exécutées pour l'objet mal acheminé afin de réaliser le dépouillement des informations :
- on recherche (22-28) dans la base de données une image d'objet qui est celle d'un objet de référence correctement acheminé et,
- à partir de cette image d'objet de référence, on balaie (29-34) un ensemble d'images d'objets regroupées qui inclut l'image de l'objet de référence pour identifier une image de l'objet mal acheminé.

2. Procédé selon la revendication 1, dans lequel ladite donnée de regroupement est une donnée indicative d'une sortie de tri ou d'un bac de stockage de sortie de tri vers lequel est dirigé l'objet.

3. Installation pour le tri de plusieurs objets ayant chacun une surface munie d'une indication de point d'acheminement vers lequel l'objet doit être acheminé, l'installation étant agencée pour, lors du premier passage de tri d'un objet courant dans l'installation, générer une image numérique de la surface de l'objet comportant ladite indication, réaliser une lecture automatique dans ladite image de ladite indication pour diriger l'objet vers une sortie de tri de l'installation, générer également à partir de l'image un identifiant unique pour l'objet et enregistrer cet identifiant unique dans une base de données en correspondance avec l'image de l'objet et le résultat de la lecture, et pour, lors de chaque passage de tri suivant de chaque objet dans l'installation, générer de nouveau une image numérique courante de l'objet comportant ladite indication pour dériver un identifiant courant pour l'objet et rechercher une concordance entre cet identifiant courant et les identifiants enregistrés dans la base de données lors du premier passage de tri des objets dans l'installation pour diriger l'objet courant vers une sortie de tri de l'installation, l'installation comportant en outre un système de dépouillement (20) pour rechercher dans la base de données au moins une image générée lors d'un passage de tri pour au moins un objet mal acheminé afin de réaliser un dépouillement des informations enregistrées pour cet objet mal acheminé dans la base de données,
**caractérisée en ce que** l'installation est en outre agencée pour, lors de ce dernier passage de tri d'un objet courant, enregistrer une donnée de regroupement en correspondance avec une image de cet objet dans la base de données de telle sorte à obtenir en mémoire différents groupes d'images correspondant respectivement aux différents regroupements des objets dans les sorties de tri ou dans des bacs de sortie de tri et le système de dépouillement (20) est agencé pour rechercher (22-28) dans la base de données une image d'objet qui est celle d'un objet de référence correctement acheminé et à partir de cette image d'objet de référence, balayer (29-34) en mémoire un ensemble d'images d'objets regroupées qui inclut l'image de l'objet de référence.

## Claims

1. A method of sorting a plurality of articles (A, B, C), in which method each article has a surface provided with an indication of a routing point to which the article is to be routed, and in which method each article goes through a sorting installation in at least two passes;
while a current article is passing through the installation on its first sorting pass, a digital image is generated of the surface of the article that bears said indication, said image of said indication is read automatically (4) so as to direct the article towards a sorting outlet of the installation, a unique identifier for the article is also generated (6) from the image, and said unique identifier is recorded (7) in a database in correspondence with the image of the article and with the result of the reading;
and during each of the following sorting passes of each article through the installation, a current digital image of the article bearing said indication is generated again in order to derive (12) a current identifier for the article, and a match (13) is sought between said current identifier and the identifiers recorded in the database during the first sorting pass of the articles through the installation, so as to direct the current article to a sorting outlet of the installation;
and in which method a search (20) is made in the database for at least one image generated during a sorting pass in the installation for at least one misrouted article in order to scrutinize the information recorded for that article in the database;
said method being **characterized in that**, during said last sorting pass for each article through the installation, a grouping data item is recorded in correspondence with an image of said article in the database so as to obtain, in a memory, various groups of images corresponding to respective ones of the groups of articles in the sorting outlets, and the following steps are performed for the misrouted article in order to scrutinize the information:
• searching (22-28) the database for an article image that is the image of a reference article that is correctly routed; and
• on the basis of said reference article image, looking through (29-34) a grouped set of article images including the image of the reference article so as to identify an image of the misrouted article.

2. A method according to claim 1, in which said grouping data item is a data item indicating a sorting outlet or a sorting outlet storage tray to which the article is directed.

3. An installation for sorting a plurality of articles, each of which has a surface provided with an indication of a routing point to which the article is to be routed, the installation being arranged so that, while a current article is passing through the installation on its first sorting pass, a digital image is generated of the surface of the article that bears said indication, said image of said indication is read automatically so as to direct the article towards a sorting outlet of the installation, a unique identifier for the article is also generated from the image, and said unique identifier is recorded in a database in correspondence with the image of the article and with the result of the reading, and so that, during each of the following sorting passes of each article through the installation, a current digital image of the article bearing said indication is generated again in order to derive a current identifier for the article, and a match is sought between said current identifier and the identifiers recorded in the database during the first sorting pass of the articles through the installation, so as to direct the current article to a sorting outlet of the installation, the installation also including a scrutiny system (20) for searching the database for at least one image generated during a sorting pass for at least one misrouted article in order to scrutinize the information recorded for said misrouted article in the database;
said installation being **characterized in that** it is also arranged so that, during said last sorting pass for a current article, a grouping data item is recorded in correspondence with an image of said article in the database so as to obtain, in a memory, various groups of images corresponding to respective ones of the groups of articles in the sorting outlets or in the sorting outlet storage trays, and the scrutiny system (20) is arranged so as to search (22-28) the database for an article image that is the image of a reference article that is correctly routed and, on the basis of said reference article image, so as to look through (29-34) in the memory a grouped set of article images including the image of the reference article.

## Patentansprüche

1. Verfahren für das Sortieren von mehreren Objekten (A, B, C), wobei jedes Objekt eine Oberfläche aufweist, welche mit einer Angabe eines Beförderungspunkts ausgestattet ist, zu dem das Objekt befördert werden muss, und wobei jedes Objekt mindestens zwei Mal eine Sortieranlage durchläuft,
wobei bei dem ersten Durchgang eines durchlaufenden Objekts in der Anlage ein Digitalbild von der Oberfläche des Objektes erzeugt wird, welches die Angabe umfasst, wobei eine automatische Erkennung (4) in dem Bild der Angabe durchgeführt wird, um das Objekt zu einem Sortierausgang der Anlage zu leiten, und wobei ausgehend von dem Bild ebenfalls ein eindeutiges Kennzeichen für das Objekt erzeugt wird (6) und dieses eindeutige Kennzeichen in einer Datenbank in Übereinstimmung mit dem Bild des Objekts und dem Ergebnis der Erkennung gespeichert wird (7),
und wobei bei jedem folgenden Durchgang jedes Objekts in der Anlage erneut ein laufendes, die Angabe umfassendes Digitalbild des Objektes erzeugt wird, um ein laufendes Kennzeichen für das Objekt abzuleiten (12), und wobei zwischen diesem laufenden Kennzeichen und den beim ersten Durchgang der Objekte in der Anlage in der Datenbank gespeicherten Kennzeichen eine Übereinstimmung (13) gesucht wird, um das durchlaufende Objekt zu einem Sortierausgang der Anlage zu leiten,
und wobei in der Datenbank mindestens ein bei einem Sortierdurchgang in der Anlage erzeugtes Bild für mindestens ein falsch befördertes Objekt gesucht wird (20), um eine Auswertung der für dieses Objekt in der Datenbank gespeicherten Informationen durchzuführen,
**dadurch gekennzeichnet, dass** bei diesem letzten Sortierdurchgang jedes Objekts in der Anlage eine Angabe zur Umgruppierung in Übereinstimmung mit einem Bild dieses Objekts in der Datenbank gespeichert wird, um auf diese Weise verschiedene Gruppen von Bildern zu speichern, welche jeweils mit den verschiedenen Umgruppierungen der Objekte in den Sortierausgängen übereinstimmen, und die folgenden Schritte für das falsch beförderte Objekt durchgeführt werden, um die Auswertung der Informationen durchzuführen:
- in der Datenbank wird ein Bild des Objekts gesucht (22 - 28), welches ein korrekt befördertes Referenzobjekt darstellt, und
- ausgehend von diesem Bild des Referenzobjekts wird eine Gesamtheit von zusammengefassten Bildern von Objekten abgetastet (29 - 34), welche das Bild des Referenzobjekts einschließt, um ein Bild des falsch beförderten Objekts zu identifizieren.

2. Verfahren gemäß Anspruch 1, wobei die Angabe zur Umgruppierung eine einen Sortierausgang oder einen Lagerbehälter des Sortierausgangs anzeigende Angabe darstellt, zu dem das Objekt geleitet wird.

3. Anlage zum Sortieren mehrerer Objekte, wobei jedes Objekt eine Oberfläche aufweist, die mit einer Angabe des Beförderungspunktes ausgestattet ist, zu welchem das Objekt befördert werden muss, wobei die Anlage eingerichtet, um beim ersten Sortierdurchgang eines durchlaufenden Objekts in der Anlage ein die Angabe umfassendes Digitalbild der Oberfläche des Objekts zu erzeugen, eine automatische Erkennung in dem Bild der Angabe durchzuführen, um das Objekt zu einem Sortierausgang der Anlage zu leiten, ebenfalls ausgehend von dem Bild ein eindeutiges Kennzeichen für das Objekt zu erzeugen und dieses eindeutige Kennzeichen in Übereinstimmung mit dem Bild des Objekts und dem Ergebnis der Erkennung in einer Datenbank zu speichern, und um bei jedem folgenden Sortierdurchgang von jedem Objekt in der Anlage erneut ein laufendes, die Angabe umfassendes Digitalbild von dem Objekt zu erzeugen, um ein laufendes Kennzeichen für das Objekt abzuleiten und eine Übereinstimmung zwischen diesem laufenden Kennzeichen und den beim ersten Sortierdurchgang der Objekte in der Anlage in der Datenbank gespeicherten Kennzeichen zu suchen, um das durchlaufende Objekt zu einem Sortierausgang der Anlage zu leiten, wobei die Anlage außerdem ein System zur Auswertung (20) umfasst, um in der Datenbank mindestens ein bei einem Sortierdurchgang für mindestens ein falsch befördertes Objekt erzeugtes Bild zu suchen, um eine Auswertung der für dieses falsch beförderte Objekt in der Datenbank gespeicherten Informationen durchzuführen,
**dadurch gekennzeichnet, dass** die Anlage außerdem eingerichtet ist, um bei diesem letzten Sortierdurchgang eines durchlaufenden Objekts eine Angabe zur Umgruppierung in Übereinstimmung mit einem Bild dieses Objekts in der Datenbank zu speichern, um auf diese Weise verschiedene Gruppen von Bildern zu speichern, welche jeweils mit den verschiedenen Umgruppierungen der Objekte in den Sortierausgängen oder in den Behältern des Sortierausgangs übereinstimmen und das System zur Auswertung (20) eingerichtet ist, um in der Datenbank ein Bild des Objekts zu suchen (22 - 28), welches ein korrekt befördertes Referenzobjekt darstellt und ausgehend von diesem Bild des Referenzobjekts im Speicher eine Gesamtheit von Bildern der umgruppierten Objekte abzutasten (29 - 34), welche das Bild des Referenzobjekts beinhaltet.
